# EUROPÄISCHE PATENTSCHRIFT

(11) **EP 2 637 914 B1**
(45) Veröffentlichungstag und Bekanntmachung des Hinweises auf die Patenterteilung: **19.02.2014**
(21) Anmeldenummer: 11779459.4
(22) Anmeldetag: 09.11.2011
(51) Int. Cl.: B62D 33/00, B60P 1/64, B62D 33/06, B62D 33/02

(54) **SCHWERLAST-TRANSPORTFAHRZEUG FÜR ISO-CONTAINER**
HEAVY DUTY TRANSPORT VEHICLE FOR ISO CONTAINERS
VÉHICULE DE MANUTENTION POUR CHARGES LOURDES POUR CONTENEUR ISO

(30) Priorität: 11.11.2010 DE 102010060505
(43) Veröffentlichungstag der Anmeldung: 18.09.2013
(73) Patentinhaber: Gottwald Port Technology GmbH, 40597 Düsseldorf (DE)
(72) Erfinder: FRANZEN, Hermann, 41238 Mönchengladbach (DE); MOUTSOKAPAS, Jannis, 40789 Monheim (DE); WIESCHEMANN, Armin, 46119 Oberhausen (DE)
(74) Vertreter: Moser & Götze
(86) Internationale Anmeldenummer: PCT/EP2011/069752
(87) Internationale Veröffentlichungsnummer: WO 2012/062808

(56) Entgegenhaltungen:
- WO-A1-2009/019330
- WO-A1-2011/023868
- US-A1- 2005 131 645

## Beschreibung

Die Erfindung betrifft ein Schwerlast-Transportfahrzeug zum Transport von ISO-Containern, das in einem Ausgangszustand ausschließlich in einem manuellen Betriebsmodus von einer Bedienperson betreibbar, über Räder mit luftbefüllten Gummireifen flurgebunden und frei verfahrbar ist, mit einer Fahrerkabine, die mit einem manuellen Kontrollsystem für die manuelle Lenkung, die manuelle Bewegungssteuerung und das manuelle Bremsen versehen ist.

Systeme für den Umschlag, also das Be- und Entladen von Fahrzeugen, Schiffen und Eisenbahnen sowie der Speicherung von Containern, insbesondere ISO-Containern, sind bekannt.

In den bekannten Systemen werden für die ISO-Containerhandhabung einerseits von einer Bedienperson beziehungsweise einem Fahrzeugführer manuell betriebene Schwerlast-Transportfahrzeuge und andererseits automatisch betriebene Schwerlast-Transportfahrzeuge eingesetzt, die eine speziell auf große Lasten ausgelegte Untergruppe der fahrerlosen Transportfahrzeuge oder Automated Guided Vehicles (AGV) bilden.

Im Sinne der Erfindung wird unter einem Schwerlast-Transportfahrzeug ein flurgebundenes Fahrzeug verstanden, das über Räder mit luftbefüllten Gummireifen frei verfahrbar ist und hierbei eine Zuladung von mindestens 15 t, vorzugsweise mindestens 20 t, transportieren kann. Als Lasten für derartige Schwerlast-Transportfahrzeuge kommen ISO-Container und Wechselbehälter in Frage. Beladene Wechselbehälter können in der Regel bis zu etwa 16 t wiegen. ISO-Container für sich genommen wiegen im beladenen Zustand bis zu 45 t. Der Transport von ISO-Containern wird bevorzugt. Unter ISO-Containern werden allgemein genormte Großbehälter mit genormten Aufnahmepunkten oder- ecken für Lastaufnahmemittel verstanden, Auch ein Schwerlast-Transportfahrzeug, das leer fährt oder einen leeren ISO-Container oder Wechselbehälter transportiert, soll unter dieses Verständnis fallen, soweit dieses Fahrzeug eine Zuladung von mindestens 15 t, vorzugsweise mindestens 20 t, transportieren kann. Es kann auch vorkommen, dass derartige Schwerlast-Transportfahrzeuge in einem Mischbetrieb arbeiten, das heißt neben den ISO-Container oder Wechselbehältern auch andere Lasten wie Sattelauflieger, Wechselbrücken, Anhänger, Lastkraftwagen oder Zugmaschinen transportieren.

Bei den manuell betriebenen Schwerlast-Transportfahrzeugen, wie zum Beispiel Sattelschleppern oder ähnlichen konventionellen Lastkraftfahrzeugen, wird das Fahrzeug von einem Fahrzeugführer von einem Fahrzeugführerstand beziehungsweise einer Fahrerkabine aus in klassischer Art und Weise bedient und gesteuert. Dies ist eine Betriebsart, die sich insbesondere für kleinere Anlagen und - den öffentlichen Straßenverkehr eignet.

Ein entsprechendes konventionelles, ausschließlich in einem manuellen Betriebsmodus von einer Bedienperson betreibbares und über Räder flurgebunden frei verfahrbares Lastkraftfahrzeug mit einer an verschiedenen Stellen des Lastkraftfahrzeugs lösbar befestigbaren Fahrerkabine ist beispielsweise aus der DE 1 153 641 B bekannt.

Die sogenannten fahrerlosen Schwerlast-Transportfahrzeuge im Sinne eines AGV umfassen einen eigenen Fahrantrieb und werden automatisch, das heißt ohne Fahrzeugführer beziehungsweise Bedienperson betrieben und hierfür von einer Zentrale beziehungsweise einem zentralen Leitrechner aus anhand vorbestimmter, programmierter Abläufe selbsttätig gesteuert.

Ein fahrerloser Automatikbetrieb beziehungsweise Automatikmodus in diesem Sinne umfasst keinen ferngesteuerten Betrieb, bei dem zwar keine unmittelbar auf einem Fahrzeugführerstand oder in einer Fahrerkabine eingreifende, jedoch mittelbar über eine entsprechende Fernsteuerung und somit nach wie vor manuell eingreifende Bedienperson das Schwerlast-Transportfahrzeug bedient und steuert.

Stattdessen ist unter fahrerlos im Sinne der vorliegenden Erfindung "mannlos" beziehungsweise "vollautomatisch" zu verstehen. Hiervon sind Störfälle und Noteingriffe ausgenommen. Das reguläre Steuern eines entsprechenden Schwerlast-Transportfahrzeugs erfolgt im Normalbetrieb in einem Automatikmodus und hierbei über automatische Mittel, das heißt programmierbare Einrichtungen zur automatischen Positionserfassung sowie zur Erzeugung, Übermittlung und Auswertung der notwendigen Steuersignale.

Derartige fahrerlose Schwerlast-Transportfahrzeuge sind zum Beispiel in der VDI Richtlinie 2510 definiert. Diese Fahrzeuge eignen sich insbesondere für größere Anlagen, in denen der Aufwand für die zur Automatisierung zusätzlich benötigte Infrastruktur zumindest ausgeglichen wird.

Auch ist aus der EP 0 302 569 B1 ein Schwerlast-Transportfahrzeug für ISO-Container bekannt, das flurgebunden über Räder mit luftbefüllten Gummireifen frei verfahrbar und ausschließlich für einen vollautomatischen und fahrerlosen Betrieb vorgesehen ist. Zum vollautomatischen Steuern umfasst das Schwerlast-Transportfahrzeug ein Navigationssystem, das in einem Einbauraum an der Unterseite des Schwerlast-Transportfahrzeuges angeordnet ist und von einem zusätzlichen Ortungssystem unterstützt wird. An der Unterseite des Einbauraums ist eine Sender-Empfänger-Einheit des Ortungssystems angeordnet.

Entsprechende Fahrzeuge sind auch aus der DE 10 2007 039 778 A1 bekannt, aus der ein flurgebundenes Transportfahrzeug (AGV) für den Transport von ISO-Containern mit mindestens einer auf einem Fahrzeugrahmen des Transportfahrzeuges angeordneten Hubplattform, die aus einer abgesenkten Transportstellung über einen Hubantrieb in eine angehobene Übergabestellung anhebbar beziehungsweise umgekehrt absenkbar ist, hervorgeht. Die Hubplattform ist über mindestens einen Kniehebel auf dem Fahrzeugrahmen befestigt, die Hubplattform über den mindestens einen Kniehebel anhebbar beziehungsweise absenkbar ist, der Hubantrieb auf den mindestens einen Kniehebel wirkt und die Hubplattform für die Hub- und Senkbewegung an dem Transportfahrzeug geführt ist.

Aus der DE 81 03 755 U1 ist ein konventioneller Gabelstapler für Paletten und kleine bis mittlere Behälter bekannt, der vorwiegend fahrerlos, jedoch auch manuell betreibbar ist. Für den lediglich ausnahmsweise manuellen Betrieb, beispielsweise Notbetrieb, ist für eine Bedienperson eine Fahrerkabine mit Steuereinrichtungen vorgesehen. Die Fahrerkabine ist im fahrerlosen Betrieb auf einem Stellplatz an dem Gabelstapler abgestellt und befestigt und wird permanent von dem verfahrenden Gabelstapler mit bewegt. Lediglich im manuellen Betrieb ist die Fahrerkabine lösbar an den Gabeln des Gabelstaplers befestigt, um dann zusammen mit den Gabeln über ein Hubgerüst vertikal hoch und herunter gefahren zu werden,

Aus der gattungsgemäßen WO 2009/019330 A1 ist ein Fahrzeug zum Transport von ISO-Containern bekannt, das modular aufgebaut ist. Das Fahrzeug ist wahlweise als konventionelles, motorisiertes Schwerlast-Transportfahrzeug oder als bloßer Anhänger betreibbar. Für den Betrieb als motorisiertes Schwerlast-Transportfahrzeug wird das Fahrzeug von einer Bedienperson gesteuert, für die eine Fahrerkabine auf dem Fahrzeug angebracht werden kann. Ein Automatikbetrieb ist für das Fahrzeug nicht vorgesehen.

Auch die internationale Patentanmeldung WO 2011/023868 A1 offenbart ein modular aufgebautes Fahrzeug zum Transport von ISO-Containern. Hierbei kann das Fahrzeug in seinem Ausgangsbetriebszustand mit einem automatischen Steuersystem oder mit einer Fahrerkabine ausgestattet werden.

Die US-Patentanmeldung US 2005/131645 A1 betrifft ein automatisch betriebenes Transportsystem, unter anderem für Frachtgut und Container, das zusätzlich optionale Steuerungseinrichtungen zum Lenken, Beschleunigen oder Bremsen durch einen Fahrer umfasst.

Es besteht jedoch nach wie vor der Wunsch nach einem manuell betriebenen Schwerlast-Transportfahrzeug für ISO-Container, das wahlweise auch in einem Automatikbetrieb verwendbar ist.

Diese Aufgabe wird durch das in Anspruch 1 wiedergegebene Schwerlast-Transportfahrzeug gelöst.

Dadurch, dass das Schwerlast-Transportfahrzeug durch eine Umrüstung fahrerlos in einem Automatikmodus betreibbar ist, für den Automatikmodus mindestens einen zweiten Einbauraum für Antennen aufweist, der zweite Einbauraum für Antennen im vorderen oder hinteren Bereich unterhalb eines Fahrzeugrahmens zwischen einer Vorderachse und der vorderen Stirnseite des Schwerlast-Transportfahrzeugs oder zwischen einer Hinterachse und einer hinteren Stirnseite des Schwerlast-Transportfahrzeugs angeordnet ist, für den Automatikmodus Antennen in dem zweiten Einbauraum angeordnet sind, das Schwerlast-Transportfahrzeug mit einer in Wirkverbindung mit dem Fahrantrieb und/oder der Lenkung und/oder der Bremsanlage stehenden Fahrzeugsteuerung ausgestattet ist, das Schwerlast-Transportfahrzeug eine Schnittstelle zum Ankoppeln des manuellen Kontrollsystems und der Antennen an die Fahrzeugsteuerung aufweist, die Fahrzeugsteuerung ein für den fahrerlosen Automatikbetrieb aktivierbares automatisches Mittel zum Eingeben und Speichern von möglichen Fahrtrouten und einer Transportaufgabe, zum automatischen Bestimmen der Fahrzeugposition im Raum, zur Steuerung der Bewegung des Fahrzeugs in Abhängigkeit von dessen Position im Raum und von der vorgegebenen Transportaufgabe und zum Abbremsen des Fahrzeugs beim Vorhandensein von Hindernissen aufweist und die Fahrerkabine an dem Schwerlast-Transportfahrzeug, insbesondere an einer vorderen Stirnseite des Schwerlast-Transportfahrzeugs, lösbar befestigt ist, ist es möglich, das Containertransportfahrzeug später auf einfache Weise für einen Automatikbetrieb umzurüsten. Somit können Betreiber kleinerer Anlagen zunächst mit manuellen Fahrzeugen starten und später, z.B. aufgrund Wachstums, diese Fahrzeuge für einen Automatikbetrieb umrüsten. Im manuellen Betrieb steuert der Fahrzeugführer das Containertransportfahrzeug aus der Fahrerkabine mittels des manuellen Kontrollsystems für die manuelle Lenkung, die manuelle Bewegungssteuerung und das manuelle Bremsen heraus. Die Fahrerkabine kann für die Verwendung im Automatikbetrieb abgebaut werden.

Besonders vorteilhaft ist außerdem, dass das manuellen Kontrollsystem über eine Sicherheitsschaltung aktivierbar beziehungsweise deaktivierbar ist.

In einer weiteren vorteilhaften Ausführungsform ist hierbei vorgesehen, dass das automatische Mittel ausgestaltet ist, um nach der Aktivierung des Automatikmodus in die Steuerung des Schwerlast-Transportfahrzeugs einzugreifen und diese im fahrerlosen Automatikbetrieb zu übernehmen.

Mit anderen Worten, das Schwerlast-Transportfahrzeug umfasst eine Fahrzeugsteuerung, die in der Lage ist einen automatischen Betrieb zu gewährleisten, die aber im manuellen Betrieb deaktiviert beziehungsweise durch das manuelle Kontrollsystem (in der Fahrerkabine) "überstimmt" wird. Diese Ausgestaltung erleichtert die spätere Aufrüstung beziehungsweise Umrüstung erheblich.

Für den Fall, dass mehr als nur ein zweiter Einbauraum für Antennen vorgesehen ist, ist es entsprechend der Anordnung des einen zweiten Einbauraums für Antennen vorteilhaft, dass ein zusätzlicher zweiter Einbauraum für Antennen im hinteren oder vorderen Bereich unterhalb des Fahrzeugrahmens zwischen der Hinterachse und der hinteren Stirnseite des Schwerlast-Transportfahrzeugs oder zwischen der Vorderachse und der vorderen Stirnseite des Schwerlast-Transportfahrzeugs angeordnet ist. Somit ist folglich sowohl im vorderen als auch im hinteren Bereich jeweils mindestens ein zweiter Einbauraum für Antennen vorgesehen.

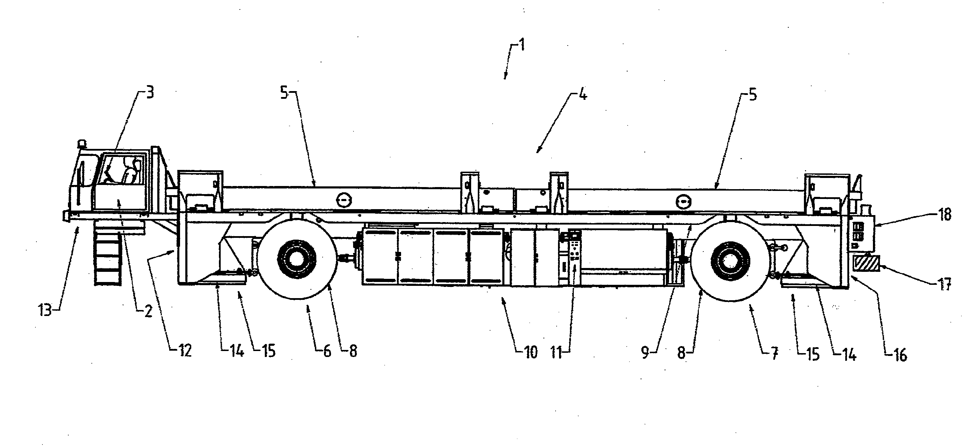

Weitere Einzelheiten, Merkmale und Vorteile der Erfindung ergeben sich aus der nachfolgenden Beschreibung eines Ausführungsbeispiels anhand der einzigen Zeichnung, in der eine schematische Seitenansicht eines Schwerlast-Transportfahrzeugs gezeigt ist, das ursprünglich ausschließlich in einem manuellen Betriebsmodus betreibbar, jedoch ausgehend von dem manuellen Betrieb für einen fahrerlosen, vollautomatischen Betrieb umrüstbar ist.

In der Figur ist ein entsprechendes Schwerlast-Transportfahrzeug 1 mit einer Fahrerkabine 2 gezeigt, das flurgebunden und über Räder 8 mit luftbefüllten Gummireifen frei verfahrbar ist. Das Schwerlast-Transporffahrzeug 1 ist in einem Ausgangszustand ausschließlich manuell betreibbar. Für den manuellen Betrieb des Schwerlast-Transportfahrzeugs 1 ist die Fahrerkabine 2 mit einem manuellen Kontrollsystem 3 für die manuelle Lenkung, die manuelle Bewegungssteuerung und das manuelle Bremsen versehen. Ein fahrerloser, vollautomatischer Betrieb des Scherlast-Transportfahrzeugs 1 ist in dem Ausgangszustand nicht möglich.

Die Fahrerkabine 2 ist an der vorderen Stirnseite 12 des Schwerlast-Transportfahrzeugs 1 lösbar befestigt. Dazu ist die Fahrerkabine 2 auf einer erhöhten Tragplattform 13 angeordnet, die an der vorderen Stirnseite 12 des Schwerlast-Transportfahrzeugs 1 lösbar verschraubt ist. Die Tragplattform 13 ist soweit erhöht, dass der Fahrer in der Fahrzeugkabine 2 eine gute Übersicht erhält. Sie befindet sich in etwa auf einem Niveau mit der Oberseite des Fahrzeugrahmens 9.

Das Schwerlast-Transportfahrzeug 1 umfasst außerdem eine Ladefläche 4 mit zwei jeweils unabhängig voneinander heb- und senkbaren Hubplattformen 5, über die bis zu zwei ISO-Container aufgenommen werden können.

Das Schwerlast-Transportfahrzeug 1 weist ferner eine jeweils elektrisch angetriebene Vorderache 6 und Hinterachse 7 auf, deren Räder 8 jeweils hydraulisch lenkbar sind. Das Schwerlast-Transportfahrzeug 1 kann somit neben den normalen Lenkmodi "Geradeaus" und "Kurvenfahrt" auch den sogenannten Krebsgang und Allradlenkung ausführen, in denen alle Räder gelenkt werden.

Zwischen den Achsen 6 und 7 ist unterhalb des Fahrzeugrahmens 9 ein erster Einbauraum 10 vorgesehen, in dem neben einem Antriebsaggregat, einem Getriebe und einem Dieseltank auch eine Fahrzeugsteuerung 11 angeordnet ist.

Es versteht sich, dass es im Rahmen der Erfindung nicht auf die Ausgestaltung des Antriebsaggregats ankommt. Es können auch sogenannte Nullemissions-Antriebsaggregate, wie beispielsweise Akkumulatoren, eingesetzt werden. Auch gemischte, hybride Betriebsarten sind denkbar.

Dabei sind die Teile des Antriebsstrangs in Fahrzeugquerrichtung etwa entlang der Längsmittelachse des Schwerlast-Transportfahrzeugs 1 angeordnet und die Komponenten der Fahrzeugsteuerung 11 seitlich daneben von außen erreichbar hinter Klappen in einem gerüstartigen Einbaurahmen angeordnet.

Die Fahrzeugsteuerung 11 steht in Wirkverbindung mit dem Fahrantrieb, der hydraulischen Lenkung und der Bremsanlage sowie dem manuellen Kontrollsystem 3.

Das manuelle Kontrollsystem 3 ist in dem Ausgangszustand des Schwerlast-Transportfahrzeugs 1 über eine Schnittstelle mit der Fahrzeugsteuerung 11 verbunden. Hierbei kann es sich um eine Steckverbindung für die entsprechenden Kabel handeln, die bei Verwendung das manuelle Kontrollsystem 3 für die Fahrzeugkontrolle aktiviert. Auch kann in der Fahrerkabine 2 eine zusätzliche Sicherheitsschaltung zum Aktivieren beziehungsweise Deaktivieren des manuellen Kontrollsystems 3 vorgesehen sein.

Um das Schwerlast-Transportfahrzeug 1 ausgehend von dem Ausgangszustand derart umzurüsten, dass auch ein fahrerloser, vollautomatischer Betrieb möglich ist, wird das Schwerlast-Transportfahrzeug 1 mit Antennen 14 ausgerüstet, die über eine entsprechende Schnittstelle mit der Fahrzeugsteuerung 11 verbunden sind. Dadurch können auf drahtlosem Wege über Funk, beispielsweise GPS, oder andere geeignete elektromagnetische Wellen entsprechende Steuersignale zwischen einer nicht dargestellten zentralen, üblicherweise rechnerunterstützten Leitwarte und den mit der Fahrzeugsteuerung 11 verbundenen Antennen 14 ausgetauscht werden. Unter Austausch von Steuersignalen wird hierbei jeweils das Senden und/oder Empfangen der entsprechenden Steuersignale verstanden. Somit muss das Erzeugen der Steuersignale nicht mehr durch unmittelbares Handeln einer Bedienperson über das manuelle Kontrollsystem 3 erfolgen, sondern verschiedene Betriebsszenarien beziehungsweise Abläufe laufen selbsttätig ab. Mit anderen Worten werden die Funktionen des manuellen Kontrollsystems 3 nach dem Umrüsten für einen fahrerlosen, vollautomatischen Betrieb von der zentralen Leitwarte und den mit der Fahrzeugsteuerung 11 verbundenen Antennen 14 übernommen.

Die Fahrzeugsteuerung 11 umfasst daher ebenfalls ein automatisches Mittel für einen Automatikbetrieb beziehungsweise für einen fahrerlosen Betrieb des Schwerlast-Transportfahrzeugs 1 im Sinne eines AGV, beispielsweise ein mit den Antennen 14 verbundenes Navigationssystem, insbesondere ein Navigationsrechnersystem. Das automatische Mittel ist über die entsprechende Schnittstelle mit den Antennen 14 verbunden. Im manuellen Betrieb ist das automatische Mittel deaktiviert, im automatischen Betrieb wird es durch das manuelle Kontrollsystem 3 übersteuert. Letzteres ist insbesondere dann der Fall, wenn beispielsweise bei laufendem fahrerlosem Automatikbetrieb aufgrund eines Störfalls ein manuelles Eingreifen einer Bedienperson einen Nothalt des Schwerlast-Transportfahrzeugs 1 erforderlich macht.

In entsprechender Weise ist auch eine Aktivierung der Fahrzeugsteuerung 11 beziehungsweise des Mittels für einen Automatikbetrieb möglich, um von dem manuellen Betrieb des Schwerlast-Transportfahrzeugs 1 auf den fahrerlosen, vollautomatischen Betrieb zu wechseln.

ist das manuelle Kontrollsystem 3 deaktiviert beziehungsweise entfernt, so wird das Schwerlast-Transportfahrzeug 1 über das dann aktivierte automatische Mittel der Fahrzeugsteuerung 11 kontrolliert und gesteuert. Dessen Aktivierung kann über eine entsprechende Schaltung in der Fahrerkabine 2 oder durch deren Entfernung erfolgen.

Das automatische Mittel der Fahrzeugsteuerung 11 umfasst beispielsweise Mittel zum Eingeben und Speichern von möglichen Fahrtrouten und einer Transportaufgabe, zum automatischen Bestimmen der Fahrzeugposition im Raum, zur Steuerung der Bewegung des Schwerlast-Transportfahrzeugs 1 in Abhängigkeit von dessen Position im Raum und von der vorgegebenen Transportaufgabe und zum Abbremsen des Schwerlast-Transportfahrzeugs 1 beim Vorhandensein von Hindernissen, wie sie aus dem Bereich der fahrerlosen AGV bekannt sind. Auf diese Weise kann das Schwerlast-Transportfahrzeug 1 über die Antennen 14 und die das automatische Mittel beziehungsweise das Navigationssystem umfassende Fahrzeugsteuerung 11 von der zentralen Leitwarte aus entsprechende Daten austauschen, auswerten und hierüber gesteuert werden.

Damit das Schwerlast-Transportfahrzeug 1 beziehungsweise dessen Fahrzeugsteuerung 11 im fahrerlosen Automatikbetrieb entsprechende Daten beziehungsweise Steuersignale von der Leitwarte aufnehmen und auswerten beziehungsweise an diese aussenden kann, benötigt es also die mit der Fahrzeugsteuerung 11 verbundenen Antennen 14.

Diese können in einen zweiten Einbauraum 15 bei der Umrüstung auf den Automatikbetrieb eingesetzt werden. Der zweite Einbauraum 15 für die Antennen 14 befindet sich im vorderen oder hinteren Bereich unterhalb des Fahrzeugrahmens 9 zwischen der Vorderachse 6 und der vorderen Stirnseite 12 des Schwerlast-Transportfahrzeugs 1 oder zwischen der Hinterachse 7 und der hinteren Stirnseite 16 des Schwerlast-Transportfahrzeugs 1. Auch zwei entsprechend im vorderen und hinteren Bereich angeordnete zweite Einbauräume 15 sind möglich.

Außerdem kann an der hinteren Stirnseite 16 des Schwerlast-Transportfahrzeugs 1 ein montierbarer Stoßbereich 18 ergänzt werden. Der montierbare Stoßbereich 18 kann zusätzlich auch zur Aufnahme eines Stoßquerträgers 17 dienen, der als Schutzeinrichtung und Notabschaltvorrichtung im Automatikbetrieb dient. Die Aktivierung der Stoßquerträger 17 bewirkt im Automatikbetrieb im Falle eines ungewollten Kontakts mit Hindernissen einen Notbremsvorgang, der zum Stillstand aller Fahrbewegungen führt.

### Bezugszeichenliste

- 1: Schwerlast-Transportfahrzeug
- 2: Fahrerkabine
- 3: manuelles Kontrollsystem
- 4: Ladefläche
- 5: Hubplattform
- 6: Vorderachse
- 7: Hinterachse
- 8: Räder
- 9: Fahrzeugrahmen
- 10: erster Einbauraum
- 11: Fahrzeugsteuerung
- 12: vordere Stirnseite
- 13: Tragplattform
- 14: Antennen
- 15: zweiter Einbauraum
- 16: hintere Stirnseite
- 17: Stoßquerträger
- 18: montierbarer Stoßbereich

## Patentansprüche

1. Schwerlast-Transportfahrzeug (1) zum Transport von ISO-Containern, das in einem Ausgangszustand ausschließlich in einem manuellen Betriebsmodus von einer Bedienperson betreibbar, über Räder (8) mit luftbefüllten Gummireifen flurgebunden und frei verfahrbar ist, mit einer Fahrerkabine (2), die mit einem manuellen
Kontrollsystem (3) für die manuelle Lenkung, die manuelle Bewegungssteuerung und das manuelle Bremsen versehen ist, und die an dem Schwerlast-Transportfahrzeug (1), insbesondere an einer vorderen Stirnseite (12) des Schwerlast-Transportfahrzeugs (1), lösbar befestigt ist, **dadurch gekennzeichnet, dass** das Schwerlast-Transportfahrzeug (1) durch eine Umrustung fahrerlos in einem Automatikmodus betreibbar ist, für den Automatikmodus mindestens einen zweiten Einbauraum (15) für Antennen (14) aufweist, der zweite Einbauraum (15) für Antennen (14) im vorderen oder hinteren Bereich unterhalb eines Fahrzeugrahmens (9) zwischen einer Vorderachse (6) und der vorderen Stirnseite (12) des Schwerlast-Transportfahrzeugs (1) oder zwischen einer Hinterachse (7) und einer hinteren Stirnseite (16) des Schwerlast-Transportfahrzeugs (1) angeordnet ist, für den Automatikmodus Antennen (14) in dem zweiten Einbauraum (15) angeordnet sind, das Schwerlast-Transportfahrzeug (1) mit einer in Wirkverbindung mit dem Fahrantrieb, der Lenkung und der Bremsanlage stehenden Fahrzeugsteuerung (11) ausgestattet ist, das Schwerlast-Transportfahrzeug (1) eine Schnittstelle zum Ankoppeln des manuellen Kontrollsystems (3) und der Antennen (14) an die Fahrzeugsteuerung (11) aufweist, die Fahrzeugsteuerung (11) ein für den fahrerlosen Automatikbetrieb aktivierbares automatisches Mittel zum Eingeben und Speichern von möglichen Fahrtrouten und einer Transportaufgabe, zum automatischen Bestimmen der Fahrzeugposition im Raum, zur Steuerung der Bewegung des Fahrzeugs in Abhängigkeit von dessen Position im Raum und von der vorgegebenen Transportaufgabe und zum Abbremsen des Schwerlast-Transportfahrzeugs (1) beim Vorhandensein von Hindernissen aufweist.

2. Schwerlast-Transportfahrzeug (1) nach Anspruch 1, **dadurch gekennzeichnet, dass** das manuelle Kontrollsystem (3) über eine Sicherheitsschaltung aktivierbar beziehungsweise deaktivierbar ist.

3. Schwerlast-Transportfahrzeug (1) nach Anspruch 1 oder 2, **dadurch gekennzeichnet, dass** das automatische Mittel ausgestaltet ist, um nach der Aktivierung des Automatikmodus in die Steuerung des Schwerlast-Transportfahrzeugs (1) einzugreifen und diese im fahrerlosen Automatikbetrieb zu übernehmen.

4. Schwerlast-Transportfahrzeug (1) nach einem der Ansprüche 1 bis 3, **dadurch gekennzeichnet, dass** ein zusätzlicher zweiter Einbauraum (15) für Antennen (14) im hinteren oder vorderen Bereich unterhalb des Fahrzeugrahmens (9) zwischen der Hinterachse (7) und der hinteren Stirnseite (16) des Schwerlast-Transportfahrzeugs (1) oder zwischen der Vorderachse (6) und der vorderen Stirnseite (12) des Schwerlast-Transportfahrzeugs (1) angeordnet ist.

## Claims

1. Heavy-duty transport vehicle (1) for handling ISO containers which, in an initial state, can be operated by an operator solely in a manual mode of operation and which, by means of wheels (8) having air-inflated rubber tyres, is ground-borne and freely displaceable, having a driver's cab (2) which is provided with a manual controlling system (3) for manual steering, manual control of movement and manual braking and which is detachably fastened to the heavy-duty transport vehicle (1) and in particular to a front end-face (12) of the heavy-duty transport vehicle (1), **characterised in that**, by a conversion, the heavy-duty transport vehicle (1) is able to be operated without a driver in an automatic mode, it has for the automatic mode at least one second installation space (15) for antennas (14), the second installation space (15) for antennas (14) is arranged in the front or rear region below a chassis (9) of the vehicle and between a front axle (6) and the front end-face (12) of the heavy-duty transport vehicle (1), or between a rear axle (7) and a rear end-face (16) of the heavy-duty transport vehicle, antennas (14) are arranged in the second installation space (15) for the automatic mode, the heavy-duty transport vehicle (1) is equipped with a vehicle control system (11) which is operatively connected to the travel drive, the steering and the braking system, the heavy-duty transport vehicle (1) has an interface for coupling the manual controlling system (3) and the antennas (14) to the vehicle control system (11), the vehicle control system (11) has an automatic means, able to be activated for automatic driverless operation, for entering and storing possible routes of travel and a handling job, for automatically determining the position of the vehicle in space, for controlling the movement of the vehicle as a function of its position in space and of the handling job which has been specified, and for braking the heavy-duty transport vehicle (1) in the presence of obstacles.

2. Heavy-duty transport vehicle (1) according to claim 1, **characterised in that** the manual controlling system (3) can be activated or deactivated by means of a safety circuit.

3. Heavy-duty transport vehicle (1) according to claim 1 or 2, **characterised in that** the automatic means is designed, on the automatic mode being activated, to intervene in the control system of the heavy-duty transport vehicle (1) and to take over the control thereof in automatic driverless operation.

4. Heavy-duty transport vehicle (1) according to one of claims 1 to 3, **characterised in that** an additional second installation space (15) for antennas (14) is arranged in the front or rear region below the chassis (9) of the vehicle and between the rear axle (7) and the rear end-face (16) of the heavy-duty transport vehicle (1), or between the front axle (6) and the front end-face (12) of the heavy-duty transport vehicle (1).

## Revendications

1. Véhicule de transport de charges lourdes (1) pour le transport de conteneurs ISO, lequel véhicule peut être utilisé au départ exclusivement dans un mode d'utilisation manuel par un opérateur, est lié au sol via des roues (8) dotées de pneumatiques et est déplaçable librement, ledit véhicule comportant une cabine de conducteur (2) qui est équipée d'un système de contrôle manuel (3) pour le guidage manuel, la commande de déplacement manuel et le freinage manuel, et qui est fixée de façon amovible au véhicule de transport de charges lourdes (1), notamment à un côté frontal avant (12) du véhicule de transport de charges lourdes (1), **caractérisé en ce que** le véhicule de transport de charges lourdes (1) peut être utilisé dans un mode automatique sans conducteur par le biais d'un changement d'équipement, **en ce qu'**il comporte pour le mode automatique au moins un deuxième compartiment (15) destiné à des antennes (14), **en ce que** le deuxième compartiment (15) destiné aux antennes (14) est disposé à l'avant ou à l'arrière au-dessous d'un châssis de véhicule (9) entre un essieu avant (6) et le côté frontal avant (12) du véhicule de transport de charges lourdes (1) ou entre un essieu arrière (7) et un côté frontal arrière (16) du véhicule de transport de charges lourdes (1), **en ce que** pour le mode automatique des antennes (14) sont disposées dans le deuxième compartiment (15), **en ce que** le véhicule de transport de charges lourdes (1) est équipé d'une commande de véhicule (11) en liaison active avec le système de roulement du guidage et le système de freinage, **en ce que** le véhicule de transport de charges lourdes (1) comporte une interface pour le couplage du système de contrôle manuel (3) et des antennes (14) à la commande de véhicule (11), **en ce que** la commande de véhicule (11) comporte un moyen automatique, activable en vue de l'utilisation automatique sans conducteur, pour entrer et mémoriser des itinéraires possibles et une tâche de transport, pour déterminer automatiquement la position du véhicule dans l'espace, pour commander le déplacement du véhicule en fonction de sa position dans l'espace et de la tâche de transport prescrite et pour freiner le véhicule de transport de charges lourdes (1) en présence d'obstacles.

2. Véhicule de transport de charges lourdes (1) selon la revendication 1, **caractérisé en ce que** le système de contrôle manuel (3) peut être activé ou désactivé par un circuit de sécurité.

3. Véhicule de transport de charges lourdes (1) selon la revendication 1 ou 2, **caractérisé en ce que** le moyen automatique est conformé pour, après l'activation du mode automatique, s'engager dans la commande du véhicule de transport de charges lourdes (1) et prendre en charge celle-ci dans l'utilisation automatique sans conducteur.

4. Véhicule de transport de charges lourdes (1) selon l'une des revendications 1 à 3, **caractérisé en ce qu'**un deuxième compartiment supplémentaire (15) destiné aux antennes (14) est disposé à l'avant ou à l'arrière au-dessous du châssis de véhicule (9) entre l'essieu arrière (7) et le côté frontal arrière (16) du véhicule de transport de charges lourdes (1) ou entre l'essieu avant (6) et le côté frontal avant (12) du véhicule de transport de charges lourdes (1).
